# EUROPÄISCHE PATENTSCHRIFT

(11) **EP 2 481 290 B1**
(45) Veröffentlichungstag und Bekanntmachung des Hinweises auf die Patenterteilung: **21.08.2019**
(21) Anmeldenummer: 11152482.3
(22) Anmeldetag: 28.01.2011
(51) Int. Cl.: A21D 13/24, A21D 13/45, A21D 13/36

(54) **Waffelprodukt mit Schokolade sowie Verfahren zur Herstellung**
Wafer product with chocolate and method for producing same
Gauffre garnie de chocolat et son procédé de fabrication

(43) Veröffentlichungstag der Anmeldung: 01.08.2012
(73) Patentinhaber: S. Spitz GmbH, 4800 Attnang-Puchheim (AT)
(72) Erfinder: Voraberger, Alois, 4673 Gaspoltshofen (AT); Senzenberger, Peter, August, 4742 Pram (AT); Böck, Alfred, 4800 Attnang-Puchheim (AT); Hofmann, Klaus, 4694 Ohlsdorf (AT)
(74) Vertreter: Popp, Eugen

(56) Entgegenhaltungen:
- EP-A2- 0 908 100
- DE-A1- 2 929 496
- US-A- 5 824 358
- DATABASE WPI Week 200014 Thomson Scientific, London, GB; AN 2000-159333 XP002643305, -& RU 2 121 799 C1 (MOSC KRASNYI OKTYABR CONFECTIONERY WKS) 20. November 1998 (1998-11-20)

## Beschreibung

Die Erfindung betrifft ein Waffelprodukt nach dem Oberbegriff des Patentanspruchs 1 sowie ein Verfahren zum Herstellen eines Waffelprodukts gemäß dem Oberbegriff des Patentanspruchs 10.

Waffelprodukte sind seit langem bekannt und existieren, beispielsweise gemäß der EP 908 100 A2, die eine Dauerbackware, bestehend aus zwei plattenförmigen Gebäckteilen und einer dazwischen angeordneten formstabilen Masse aus Schokolade oder einer fetthaltigen Masse beschreibt oder der DE 29 29 496 A1, die eine erstaunlich stabile Waffel mit einem Schokoladenüberzug beschreibt, in vielfältigen Varianten, wobei in aller Regel eine Waffel schichtartig mit einem Belag, nämlich zumeist mit einer Creme bestrichen ist, über welchem wiederum eine Waffel angeordnet ist. Diese bisher bekannten Waffelprodukte weisen üblicherweise eine Cremefüllung auf und vermitteln einem Esser des Waffelprodukts in nachteiliger Weise ein relativ weiches undifferenziertes Bissempfinden, wobei die Waffel den Zähnen eines Essers einen geringen Widerstand entgegensetzt und die Füllung selbst cremeartig ohne nennenswerten Bisswiderstand ausgebildet ist. Solche Waffelprodukte sind beispielsweise aus der US 5,824,358 A oder der RU 2 121 799 C1 bekannt. Ein weiterer Nachteil dieser in ihrer Konsistenz sehr weichen und streich- bis fließfähigen Waffelfüllmasse besteht darin, dass diese Streichfähigkeit üblicherweise durch einen sehr hohen Fettanteil in der Füllmasse erreicht wird, der es zwar einerseits ermöglicht, die Füllmasse auf ein Waffelunterteil aufzutragen, ohne dieses dabei zu zerbrechen, jedoch andererseits einen sehr hohen Energieinhalt in Form von Fett aufweist, der bei einem Verzehr zu einer sehr hohen Kalorienaufnahme für den Esser führt.

Der Erfindung liegt die Aufgabe zugrunde, ein neuartiges Waffelprodukt sowie ein Verfahren zu seiner Herstellung zur Verfügung zu stellen, das neben einem im Vergleich zu Fettcremes niedrigeren Energieinhalt ein neuartiges Bissempfinden und damit ein alternatives Geschmackserlebnis bietet.

Diese Aufgabe wird durch ein Waffelprodukt gemäß Patentanspruch 1 sowie durch ein Verfahren zum Herstellen eines solchen Waffelprodukts gemäß Patentanspruch 10 gelöst.

Insbesondere wird die Aufgabe durch ein Waffelprodukt mit einem eßbaren Waffelunterteil und einem oberhalb des Waffelunterteils angeordneten schokoladehaltigen Aufstrich aus Schokolade, weißer Schokolade oder Milchschokolade gelöst, wobei der schokoladehaltige Aufstrich kein zusätzliches zugesetztes Fett aufweist, der schokoladenhaltige Aufstrich Bissfest ausgebildet ist und eine Schichtdicke im Bereich von 0,5 mm bis 30 mm und das Waffelunterteil eine Schichtdicke im bereich von 0,5 mm bis 15 mm aufweist, wobei der schokoladehaltige Aufstrich bei einer normierten Dicke von 3 mm ± 10 % unter Aufwendung einer Bisskraft von
- im Falle von Schokolade mindestens 125 N,
- im Falle von weißer Schokolade mindestens 115 N, und
- im Falle von Milchschokolade mindestens 110 N,
jeweils ± 30 %, bevorzugt ± 20 % und besonders bevorzugt ± 10 %, und das Waffelunterteil bei einer normierten Dicke von 5 mm ± 10 % unter Aufwendung einer Bisskraft von 30 N ± 10 N, in zu der jeweiligen Dickenerstreckung von schokoladehaltigem Aufstrich und Waffelunterteil im Wesentlichen parallelen Richtung, zerteilbar ist, und wobei das Waffelunterteil zumindest einseitig eine Strukturierung, beispielsweise ein Karo- oder Rautenmuster, aufweist und der Aufstrich vollfächig und innig mit dem Waffelunterteil verbunden ist, wobei der schokoladehaltige Aufstrich in etwaige Vertiefungen des strukturierten Waffelunterteils eingedrungen und auf diese Weise die Kontaktfläche zwischen schokoladehaltigem Aufstrich und Waffelunterteil vergrößert und maximiert ist.

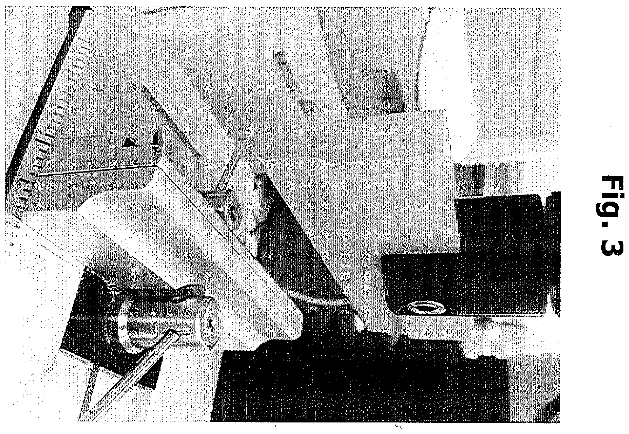

Die Messung der Bisskraft wurde mit dem Gerät "Texture Analyser TA-XT 2i" der Firma "Stable Micro Systems" mit dem Aufsatz "3 Point Ben Rig" mit einer 2-Punkt-Messung bei Raumtemperatur durchgeführt. Eine Abbildung des verwendeten Geräts ist in Fig. 3 dargestellt. Als Bisskraft ist hierbei die Kraft bezeichnet, die nötig ist, um das jeweilige Teststück in, zu der jeweiligen Dickenerstreckung des Teststücks, im Wesentlichen paralleler Richtung zu zerteilen.

Erfindungsgemäß erfordert eine Bisskraft zum Zerteilen des schokoladehaltigen Aufstrichs einen Anteil von 80 % bis 98 %, bevorzugt einen Anteil von 90 % bis 95 % der Gesamtbisskraft, welche erforderlich ist, um das erfindungsgemäße Waffelprodukt zu zerteilen.

Im Rahmen dieser Erfindung werden die Begriffe "Schokolade", "weiße Schokolade" und "Milchschokolade" im Sinne der Richtlinie 2000/36/EG des Europäischen Parlaments und des Rates vom 23. Juni 2000 über Kakao- und Schokoladeerzeugnisse für die menschliche Ernährung, veröffentlicht im Amtsblatt Nr. L 197 vom 03/08/2000 S. 0019 - 0025 verwendet. Ferner sind alle Produkte, die im Anhang 1 dieser Richtlinie angeführt sind, vom Umfang dieser Erfindung als Bestandteile des schokoladehaltigen Aufstrichs umfasst, wobei explizit auch dort genannte gefüllte Schokoladen oder mit Stückchen versehene Schokoladen für den schokoladenhaltigen Aufstrich verwendet werden.

Ein wesentlicher Punkt der Erfindung liegt darin, dass das erfindungsgemäße Waffelprodukt für den schokoladenhaltigen Aufstrich lediglich Schokolade, die aus einer Mischung von mindestens 43 % Gesamtkakao-Trockenmasse, davon mindestens 26 % Kakaobutter besteht, weiße Schokolade, die aus einem Erzeugnis aus Kakaobutter, Milch oder Milcherzeugnissen und Zuckerarten, das mindestens 20 % Kakaobutter und mindestens 14 % Milchtrockenmasse aus teilweise oder vollständig dehydratisierter Vollmilch, teil- oder vollentrahmter Milch, Sahne, teilweise oder vollständig dehydratisierter Sahne, Butter oder Milchfett, davon mindestens 3,5 % Milchfett, enthält, besteht oder Milchschokolade mit mindestens 30 % Gesamtkakao-Trockenmasse und mindestens 18 % Milchtrockenmasse, davon mindestens 4,5 % Milchfett, aus teilweise oder vollständig dehydratisierter Vollmilch, teil- oder vollentrahmter Milch, Sahne, teilweise oder vollständig dehydratisierter Sahne, Butter oder Milchfett, besteht, verwendet wird und der schokoladehaltige Aufstrich jedoch kein zusätzliches zugesetztes Fett umfasst. Auf diese Weise ist es möglich, den Energieinhalt des erfindungsgemäßen Waffelprodukts gegenüber herkömmlichen fettcremehaltigen Waffelprodukten deutlich zu reduzieren, da das erfindungsgemäße Waffelprodukt aufgrund vorgenannter Rezeptur auf Fette verzichtet, die eine erheblich höhere Energiedichte und damit Kalorien aufweisen als erfindungsgemäß eingesetzte Kohlehydrate. Darüber hinaus gewährleistet es die vorgenannte Zusammensetzung des erfindungsgemäßen Waffelprodukts, eine Füllung für das Waffelprodukt zur Verfügung zu stellen, die eine hohe bis sehr hohe Bissfestigkeit aufweist, was ein ganz neuartiges Bissemfinden erzeugt und ermöglicht, wenn ein Verbraucher zunächst die Waffel zerbeißt und anschließend auf den harten Schokoladekern trifft, der für eine Zerteilung die vorgenannten hohen Bisskräfte benötigt.

Das erfindungsgemäße Waffelprodukt weist einen Anteil von Waffel zu einem Anteil an schokoladehaltigem Aufstrich im Bereich von 5 % : 95 % bis 80 % : 20 % auf, wobei ein Schokoladeanteil des schokoladehaltigen Aufstrichs im Bereich von 20 % bis 100 %, bevorzugt im Bereich von 50 % bis 100 % und besonders bevorzugt im Bereich von 65 % bis 100 % liegt, wobei gegebenenfalls als zusätzliche Bestandteile zur Ergänzung auf 100 %, insbesondere zerkleinerte, Nüsse und/oder Trockenfrüchte und/oder Schalenfrüchte, vorzugsweise das jeweilige zerkleinerte Fruchtfleisch derselben, enthalten sind.

Gemäß einer weiteren Ausführungsform der vorliegenden Erfindung ist oberhalb des schokoladehaltigen Aufstrichs zumindest eine weitere Waffelschicht sowie gegebenenfalls zumindest eine weitere Schicht aus schokoladehaltigem Aufstrich angeordnet. Auf diese Weise können erfindungsgemäß Waffelprodukte mit Schicht- bzw. Stapelstrukturen angeboten werden, wobei ein bevorzugtes Waffelprodukt aus einem Waffelunterteil, einem darauf angeordneten schokoladehaltigen Aufstrich und einem Waffeloberteil zusammengesetzt ist. Ein solchermaßen aufgebautes Waffelprodukt ermöglicht einen besonders konsumentenfreundlichen Verzehr, bei dem lediglich die außenseitig angeordneten Waffeln angegriffen werden müssen und ein Kontakt mit dem schokoladehaltigen Aufstrich unterbleibt. Ein solcher Kontakt wäre indes erfindungsgemäß aufgrund der vorgenannten Rezeptur auch nicht problematisch, da die erfindungsgemäß eingesetzten schokoladehaltigen Aufstriche bei Raumtemperatur nicht in der Hand schmelzen und deshalb nicht abfärben.

Des weiteren entsprechen die Schichtdicken der weiteren Waffelschicht(en) und/oder der weiteren Schicht(en) aus schokoladehaltigem Aufstrich im wesentlichen den Schichtdicken des Waffelunterteils und des schokoladehaltigen Aufstrichs, mit welchem das Waffelunterteil beschichtet ist. Es sei an dieser Stelle jedoch erwähnt, dass die Schichtdicken sowohl der weiteren Waffelschicht(en) als auch der weiteren Schicht(en) aus schokoladehaltigem Aufstrich sowohl dünner als auch dicker ausgebildet sein können als das Waffelunterteil und der auf diesem angebrachte schokoladehaltige Aufstrich, beispielsweise, um anhand unterschiedlicher Schichtdicken von Waffelteil und Aufstrich in Querschnittsansicht ein Muster oder eine Dekoration zu erzeugen, welche dem erfindungsgemäßen Waffelprodukt ein neuartiges attraktives Erscheinungsbild verleiht. Des weiteren sei darauf hingewiesen, dass die Waffelschichten zwar im wesentlichen flächig und eben ausgebildet sind, jedoch auch eine Wellen- oder andere Reliefstruktur aufweisen können. Darüber hinaus ist es möglich, dass jeweilige Waffelschichten eine unterschiedliche Dickenerstreckung aufweisen und beispielsweise konisch, aber auch konkav oder konvex geformt sein können, so dass der schokoladehaltige Aufstrich beispielsweise in einer Ausnehmung einer konkav geformten Waffel angeordnet ist.

In diesem Zusammenhang sei darauf hingewiesen, dass der erfindungsgemäße schokoladehaltige Aufstrich ebenfalls nicht eine einheitliche Dicke aufweisen muss, sondern neben einer einheitlich dick ausgeführten Variante des erfindungsgemäßen Aufstrichs auch schokoladehaltige Aufstriche in den Umfang der Erfindung fallen, die unterschiedliche Dickenerstreckungen, oder auch alternierende Strukturen, beispielsweise kleine pyramidale oder bipyramidale Erhebungen aufweisen können.

In diesem Zusammenhang sei darauf hingewiesen, dass das Waffelunterteil zumindest einseitig eine Strukturierung, beispielsweise ein Karo- oder Rautenmuster, aufweist und die weitere(n) Waffelschicht(en) zumindest einseitig eine Strukturierung, beispielsweise ein Karo- oder Rautenmuster, aufweisen können, wobei sich der schokoladehaltige Aufstrich in die jeweiligen Vertiefungen eines solchen Musters hinein erstrecken kann. Es wird darauf hingewiesen, dass erfindungsgemäß ferner auch andere Muster, wie beispielsweise Linien, Kreise oder ovale Strukturierungen an den Waffelschichten vorgesehen sein können. Diese Strukturierungen dienen einerseits der Stabilität und Ästhetik des erfindungsgemäßen Waffelprodukts, wobei jeweilige Stege oder Erhebungen in der Struktur als Stabilisierungselemente dienen. Darüber hinaus wird durch eine Strukturierung der jeweiligen Waffelschichten die Oberfläche dieser Waffelschichten vergrößert, welche in Kontakt mit dem schokoladehaltigen Aufstrich steht, so dass dieser schokoladehaltige Aufstrich in eine unmittelbare und innige Anlage mit der jeweiligen angrenzenden Waffelschicht kommt, so dass das erfindungsgemäße Waffelprodukt in vorteilhafter Weise ohne eine gesonderte Klebstoffschicht ausgebildet werden kann, die bei herkömmlichen Waffelprodukten in aller Regel notwendig ist, um eine Verbindung zwischen Füllmasse und Begrenzungswaffel herzustellen. Somit ist das erfindungsgemäße Waffelprodukt einerseits sehr einfach und ohne Klebstoffschicht aufgebaut, bietet aber durch seine Füllung aus echter Schokolade, weißer Schokolade oder Milchschokolade ein ganz neuartiges Bissempfinden, das durch den erfindungsgemäß harten Schokoladenkern in einer relativ weichen, jedoch krossen Waffel bedingt ist.

In diesem Zusammenhang wird darauf hingewiesen, dass eine Bisskraft zum Zerteilen einer oder jeder weiteren Waffelschicht, wie vorstehend normiert, im Wesentlichen derjenigen des Waffelunterteils entspricht und/oder eine Bisskraft zum Zerteilen einer oder jeder weiteren Schicht aus schokoladehaltigem Aufstrich, wie vorstehend normiert, im Wesentlichen derjenigen des schokoladehaltigen Aufstrichs entspricht, der auf dem Waffelunterteil angeordnet ist.

Im Übrigen kann das erfindungsgemäße Waffelprodukt nach Wunsch zumindest teilweise mit einer Beschichtung, beispielsweise einer Glasurmasse und/oder einer Schokoladenkuvertüre und/oder einer kakaohaltigen Fettglasur und/oder Streuseln und/oder einer Dekoration versehen sein, wobei bezüglich dieser Beschichtung alle in vorgenannter Richtlinie des Europäischen Parlaments und des Rates genannten Stoffe, Substanzen und Zutaten vom Umfang der Erfindung umfasst sind.

Des weiteren wird die erfindungsgemäße Aufgabe durch ein Verfahren zum Herstellen eines Waffelprodukts mit einem eßbaren, insbesondere im Wesentlichen flächigen, Waffelunterteil und einem oberhalb, respektive an dem Waffelunterteil angeordneten, sich im Wesentlichen parallel zu diesem erstreckenden, schokoladehaltigen Aufstrich aus Schokolade, weißer Schokolade oder Milchschokolade gelöst, wobei das Verfahren folgende Schritte umfasst:
- Bereitstellen eines Waffelunterteils mit einer Schichtdicke im Bereich von 0,5 mm bis 15 mm, wobei das Waffelunterteil zumindest einseitig eine Strukturierung, beispielsweise ein Karo- oder Rautenmuster, aufweist, durch die die Oberfläche der jeweiligen Waffelschicht vergrößert ist;
- Erwärmen des schokoladehaltigen Aufstrichs auf eine Temperatur im Bereich von 14°C bis 47°C, bevorzugt im Bereich von 25°C bis 47°C, um schokoladehaltige Aufstrich fließ- und/oder streichfähig zu machen;
- Aufstreichen oder Aufgießen des erwärmten schokoladehaltigen Aufstrichs auf das Waffelunterteil mit einer Schichtdicke im Bereich von 0,5 mm bis 30 mm zur Erzeugung eines Waffelblocks, wobei der schokoladehaltige Aufstrich in etwaige Vertiefungen des strukturierten Waffelunterteils eindringt und auf diese Weise die Kontaktfläche zwischen schokoladehaltigem Aufstricht und Waffelunterteil vergrößert und maximiert wird;
- Abkühlen des Waffelblocks; und
- Schneiden des Waffelblocks in Waffelriegel,
wobei das Waffelprodukt unter Aufwendung einer Gesamtbisskraft von 110 N bis 180 N ± 20%, bevorzugt ± 10%, in zu seiner Dickenerstreckung im Wesentlichen parallelen Richtung, zerteilbar ist.

Ein wesentlicher Punkt des erfindungsgemäßen Verfahrens besteht darin, dass ein Waffelunterteil mit einer Schichtdicke im Bereich von 0,5 mm bis 15 mm bereitgestellt wird, auf das ein erwärmter, und hierdurch fließ- und/oder streichfähig gemachter schokoladehaltiger Aufstrich aufgebracht wird, wobei dies durch Aufstreichen oder Aufgießen erfolgen kann. Im Zuge dieses Aufbringens des schokoladehaltigen Aufstrichs auf das Waffelunterteil verbindet sich der Aufstrich vollflächig und innig mit dem Waffelunterteil, wobei der schokoladehaltige Aufstrich in etwaige Vertiefungen eines strukturierten Waffelunterteils eindringt und auf diese Weise die Kontaktfläche zwischen schokoladehaltigem Aufstrich und Waffelunterteil vergrößert und maximiert wird, so dass ein gemäß dem Stand der Technik benötigter eßbarer Klebstoff erfindungsgemäß nicht notwendig ist. Im übrigen sei darauf hingewiesen, dass erfindungsgemäß zunächst nicht einzelne Waffelriegel, sondern ein Waffelblock erzeugt wird, der erst nach einem Abkühlen in einzelne Waffelriegel zerschnitten wird.

Erfindungsgemäß weist das neuartige Waffelprodukt, das gemäß dem erfindungsgemäßen Verfahren hergestellt wurde, bei einem Verbraucher ein neuartiges Bissempfinden auf, da zum Zerteilen des Waffelprodukts eine hohe Gesamtbisskraft von 110 N bis 180 N ± 30 %, bevorzugt ± 20 % und besonders bevorzugt ± 10 % aufgewendet werden muss, wobei diese Gesamtbisskraft hinsichtlich einer Verwendung von Schokolade, weißer Schokolade oder Milchschokolade als schokoladehaltiger Aufstrich variiert.

Des weiteren sei darauf hingewiesen, dass erfindungsgemäß vor dem Abkühlen des Waffelblocks zumindest eine weitere Waffelschicht sowie gegebenenfalls auf die zumindest eine weitere Waffelschicht zumindest eine weitere Schicht aus erwärmtem schokoladehaltigem Aufstrich, insbesondere stapelweise und vorzugsweise alternierend, aufgebracht wird.

Ferner liegt es im Umfang der Erfindung, unterschiedlich gefärbte schokoladehaltige Aufstriche unmittelbar aneinandergrenzend oder durch jeweilige Waffelschichten voneinander getrennt in einem erfindungsgemäßen Waffelprodukt zu kombinieren; so kann beispielsweise eine Schicht aus Schokolade ein- oder beidseitig von einer Schicht aus weißer Schokolade und/oder Milchschokolade umgeben sein, um sowohl das neuartige erfindungsgemäße Bissempfinden als auch das neuartige erfindungsgemäße Geschmacksempfinden weiter zu verbessern.

Gemäß einer weiteren Ausführungsform der Erfindung wird ein Teig zur Herstellung des Waffelunterteils und/oder weiterer Waffelschicht(en) 3,8 Min. ± 15 % gebacken. Ein solcher Teig weist erfindungsgemäß vorzugsweise eine Zusammensetzung wie in nachfolgender Tabelle 1 auf:

**Tabelle 1**

| **Zusammensetzung Waffelteig (gebacken)** | Standard Waffel | Dunkel eingefärbte Waffel | |
|---|---|---|---|
| Weizenmehl Type 700 | 86,8 | 85,4 | % |
| Sojamehl | 7,1 | 7,0 | % |
| Pflanzenöl | 1,4 | 1,3 | % |
| Sojalecithin | 0,9 | 0,9 | % |
| Speisesalz unjodiert | 0,3 | 0,3 | % |
| Natriumhydrogencarbonat | 0,6 | 0,6 | % |
| Wasser | 1,5 | 1,5 | % |
| Magerkakao | 1,4 | 0,0 | % |
| Farbstoff Pflanzenkohle | 0,0 | 3,0 | % |
| | 100,0 | 100,0 | % |

Die in der Tabelle angegebenen Werte können jeweils um ca. 10 % der jeweils angegebenen Werte variiert werden, um ein erfindungsgemäß bevorzugtes Waffelprodukt zu erzeugen.

Wie aus der Tabelle zu entnehmen ist, liegt es ferner im Umfang der Erfindung, eine Waffelschicht, beispielsweise mit Pflanzenkohle einzufärben. An dieser Stelle sind jedoch auch andere eßbare Farbstoffe aus dem Stand der Technik vom Umfang der Erfindung umfasst.

Des weiteren kann nach, bevorzugt jedoch vor einem Schneiden des Waffelblocks in Waffelriegel eine Beschichtung auf das Waffelprodukt aufgebracht werden, die beispielsweise eine Glasurmasse und/oder Schokoladenkuvertüre und/oder kakaohaltige Fettglasur und/oder Streusel und/oder eine Dekoration umfasst.

Weitere Ausführungsformen der Erfindung ergeben sich aus den Unteransprüchen.

Nachfolgend wird die Erfindung anhand eines Ausführungsbeispiels beschrieben, das anhand der Abbildungen näher erläutert wird. Hierbei zeigen:
- Fig. 1: schematische Darstellung erfindungsgemäßer Waffelprodukte;
- Fig. 2: eine schematische Darstellung eines erfindungsgemäßen Waffelprodukts in Querschnittsansicht; und
- Fig. 3: eine Darstellung eines Geräts zur Bisskraftbestimmung.

In der nachfolgenden Beschreibung werden für gleiche und gleich wirkende Teile dieselben Bezugsziffern verwendet.

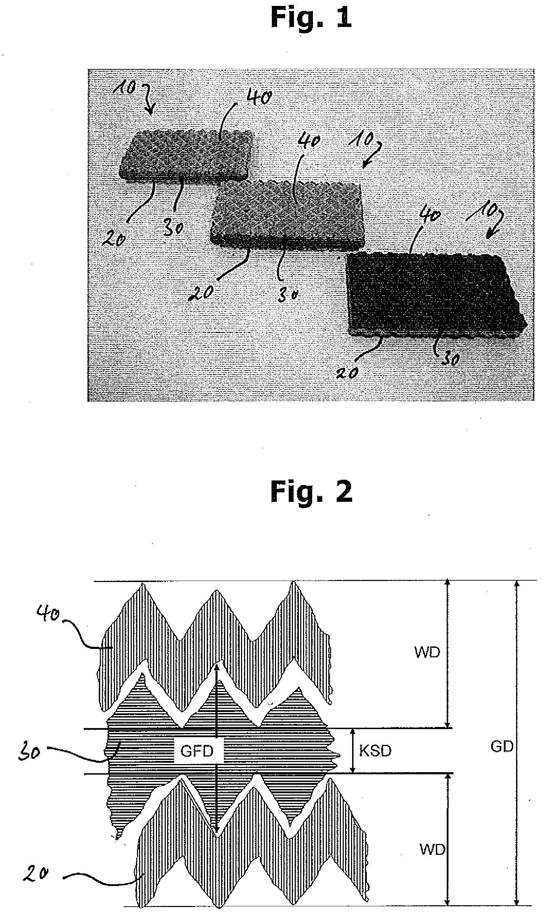

In Fig. 1 sind drei verschiedene Varianten eines erfindungsgemäßen Waffelprodukts 10 dargestellt, die jeweils aus einem Waffelunterteil 20 bestehen, auf welches ein schokoladehaltiger Aufstrich 30 aufgebracht ist, der wiederum durch eine weitere Waffelschicht 40 abgedeckt ist. Die in Fig. 1 dargestellten Waffelprodukte weisen jeweils an ihren Ober- und Unterseiten Waffelteile 20, 40 auf, die mit Rautenmustern versehen sind. Das in der Abbildung rechts unten dargestellte Waffelprodukt 10 zeigt eine Variante, bei welcher ein schokoladehaltiger Aufstrich 30 aus weißer Schokolade zwischen zwei dunkel eingefärbte Waffelteile 20, 40 eingelegt ist. Das in der Mitte von Fig. 1 dargestellte Waffelprodukt 10 weist einen zwischen Waffelunterteil 20 und eine weitere Waffelschicht 40 eingebrachten schokoladenhaltigen Aufstrich 30 aus Milchschokolade auf, während das Waffelprodukt 10, das in Fig. 1 links oben dargestellt ist, einen schokoladehaltigen Aufstrich 30 aus Schokolade umfasst.

Fig. 2 zeigt eine schematische Darstellung einer Querschnittsansicht durch ein erfindungsgemäßes Waffelprodukt 10, das ein Waffelunterteil 20 sowie eine weitere Waffelschicht 40 aufweist, zwischen weiche ein schokoladehaltiger Aufstrich 30 eingebracht ist. Sowohl Waffelunterteil 20 als auch die weitere Waffelschicht 40 sind an ihrer jeweiligen Oberfläche sowie an ihrer der jeweiligen Oberfläche gegenüberliegenden Außenfläche mit einem Karomuster versehen, welches bewirkt, dass sich sowohl im Waffelunterteil 20 als auch in der weiteren Waffelschicht 40 "Täler" und "Erhebungen" ausbilden, die sich sowohl zur jeweiligen Außenseite des Waffelprodukts, jedoch auch in Richtung des schokoladehaltigen Aufstrichs 30 erstrecken und eine größte Fülldicke GFD von 6 mm ergeben, wobei eine kleinste Schokoladendicke KSD von minimal 3 mm Dicke vorliegt. Die Waffeldicke WD selbst beträgt 5 mm ± 0,5 mm Schwankungsbreite, so dass sich eine Gesamtdicke GD des Waffelriegels von 13 mm ± 1,5 mm ergibt. Eine Bisskraft zur Zerteilung des jeweiligen Waffelblatts beträgt hierbei bei einer Waffeldicke von 5 mm gemäß der Meß-Definition, wie sie in Fig. 2 dargestellt ist, 30 N ± 10 N, während die Bisskraft zum Zerteilen des schokoladehaltigen Aufstrichs bei einer kleinsten Schokoladendicke KSD von 3 mm im Falle von Milchschokolade 110 N, im Falle von Schokolade 125 N und im Falle von weißer Schokolade 115 N, jeweils mit einer Schwankungsbreite von 10 % bis 15 % beträgt.

Eine beispielhafte Zusammensetzung eines erfindungsgemäßen Waffelprodukts ist in nachfolgender Tabelle 2 angegeben, wobei die angegebenen Werte allgemein jeweils um ± 10 % variiert werden können, ohne den Umfang der Erfindung zu verlassen.

**Tabelle 2**

| **Zusammensetzung Fertigprodukt "Waffel gefüllt mit Milchschoklade (81%)"** | | |
|---|---|---|
| Zucker | 32,9 | % |
| Weizenmehl | 16,5 | % |
| Sojamehl | 1,3 | % |
| Sojalecithin | 0,6 | % |
| Pflanzenöl | 0,3 | % |
| Backtriebmittel Natriumhydrogencarbonat | 0,1 | % |
| Kakaobutter | 22,7 | % |
| Natürliches Aroma | 0,02 | % |
| Speisesalz | 0,06 | % |
| Kakaomasse | 11,3 | % |
| Vollmilchpulver | 11,0 | % |
| Magermilchpulver | 2,9 | % |
| Magerkakaopulver | 0,3 | % |
| | 100,0 | % |

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste:

- 10: Waffelprodukt
- 20: Waffel unterteil
- 30: schokoladehaltiger Aufstrich
- 40: weitere Waffelschicht
- GFD: größte Fülldicke
- KSD: kleinste Schokoladendicke
- WD: Waffeldicke
- GD: Gesamtdicke

## Patentansprüche

1. Waffelprodukt mit einem essbaren Waffelunterteil und einem oberhalb des Waffelunterteils angeordneten schokoladehaltigen Aufstrich aus Schokolade, weißer Schokolade oder Milchschokolade,
**dadurch gekennzeichnet, dass**
der schokoladehaltigen Aufstrich lediglich Schokolade, weiße Schokolade und Milchschokolade im Sinne der Richtlinie 2000/36/EG des Europäischen Parlaments und des Rates vom 23. Juni 2000 über Kakao- und Schokoladeerzeugnisse für die menschliche Ernährung, veröffentlicht im Amtsblatt Nr. L 197 vom 03/08/2000 S. 0019 - 0025 enthält, und
der schokoladehaltige Aufstrich kein zusätzliches zugesetztes Fett aufweist, so dass der schokoladenhaltige Aufstrich bißfest ausgebildet und bei einer normierten Dicke von 3 mm ± 10 % bei Raumtemperatur unter Aufwendung einer Bisskraft von:
- im Falle von Schokolade mindestens 125 N,
- im Falle von Weißer Schokolade mindestens 115 N, und
- im Falle von Milchschokolade mindestens 110 N,
jeweils ± 20 %, bevorzugt ± 10 %, und das Waffelunterteil bei einer normierten Dicke von 5 mm ± 10 % bei Raumtemperatur unter Aufwendung einer Bisskraft von 30 N ± 10 N, in zu der jeweiligen Dickenerstreckung von schokoladehaltigem Aufstrich und Waffelunterteil im Wesentlichen parallelen Richtung, zerteilbar ist,
wobei der schokoladehaltige Aufstrich eine Schichtdicke im Bereich von 0,5 mm bis 30 mm und das Waffelunterteil eine Schichtdicke im Bereich von 0,5 mm bis 15 mm aufweist, und
wobei das Waffelunterteil zumindest einseitig eine Strukturierung, beispielsweise ein Karo- oder Rautenmuster, aufweist und der Aufstrich vollflächig und innig mit dem Waffelunterteil verbunden ist, wobei der schokoladehaltige Aufstrich in etwaige Vertiefungen des strukturierten Waffelunterteils eingedrungen und auf diese Weise die Kontaktfläche zwischen schokoladehaltigem Aufstrich und Waffelunterteil vergrößert und maximiert ist.

2. Waffelprodukt nach Anspruch 1,
**dadurch gekennzeichnet, dass**
ein Anteil von Waffel zu einem Anteil an schokoladehaltigem Aufstrich (30) im Bereich von 5% : 95% bis 80% : 20% liegt.

3. Waffelprodukt nach einem der vorhergehenden Ansprüche,
**dadurch gekennzeichnet, dass**
ein Schokoladeanteil des schokoladehaltigen Aufstrichs im Bereich von 20% bis 100%, bevorzugt im Bereich von 50% bis 100% und besonders bevorzugt im Bereich von 65% bis 100% liegt, wobei gegebenenfalls als zusätzliche Bestandteile zur Ergänzung auf 100%, insbesondere zerkleinerte, Nüsse und/oder Trockenfrüchte und/oder Schalenfrüchte enthalten sind.

4. Waffelprodukt nach einem der vorhergehenden Ansprüche,
**dadurch gekennzeichnet, dass**
oberhalb des schokoladehaltigen Aufstrichs zumindest eine weitere Waffelschicht sowie gegebenenfalls zumindest eine weitere Schicht aus schokoladehaltigem Aufstrich, angeordnet ist.

5. Waffelprodukt nach Anspruch 4,
**dadurch gekennzeichnet, dass**
Schichtdicken der weiteren Waffelschicht(en) und/oder der weiteren Schicht(en) aus schokoladehaltigem Aufstrich im Wesentlichen den Schichtdicken des Waffelunterteils und des schokoladehaltigen Aufstrichs entsprechen.

6. Waffelprodukt nach einem der vorhergehenden Ansprüche 4 oder 5,
**dadurch gekennzeichnet, dass**
eine Bisskraft zum Zerteilen einer oder jeder weiteren Waffelschicht im Wesentlichen derjenigen des Waffelunterteils entspricht und/oder eine Bisskraft zum Zerteilen einer oder jeder weiteren Schicht aus schokoladehaltigem Aufstrich im Wesentlichen derjenigen des schokoladehaltigen Aufstrichs entspricht, der auf dem Waffelunterteil angeordnet ist.

7. Waffelprodukt nach einem der vorhergehenden Ansprüche,
**dadurch gekennzeichnet, dass**
das Waffelprodukt zumindest teilweise mit einer Beschichtung, beispielsweise einer Glasurmasse und/oder Schokoladenkuvertüre und/oder kakaohaltigen Fettglasur und/oder Streuseln und/oder einer Dekoration, versehen ist.

8. Waffelprodukt nach einem der vorhergehenden Ansprüche,
**dadurch gekennzeichnet, dass**
das Waffelprodukt ohne gesonderte Klebstoffschicht ausgebildet ist.

9. Waffelprodukt nach einem der vorhergehenden Ansprüche,
**dadurch gekennzeichnet, dass**
die weitere(n) Waffelschicht(en) zumindest einseitig eine Strukturierung, beispielsweise ein Karo- oder Rautenmuster, aufweisen.

10. Verfahren zum Herstellen eines Waffelprodukts mit einem essbaren, im Wesentlichen flächigen, Waffelunterteil und einem oberhalb des Waffelunterteils angeordneten, sich im Wesentlichen parallel zu diesem erstreckenden, schokoladehaltigen Aufstrich aus Schokolade, weißer Schokolade oder Milchschokolade, wobei
- lediglich Schokolade, weiße Schokolade und Milchschokolade im Sinne der Richtlinie 2000/36/EG des Europäischen Parlaments und des Rates vom 23. Juni 2000 über Kakao- und Schokoladeerzeugnisse für die menschliche Ernährung, veröffentlicht im Amtsblatt Nr. L 197 vom 03/08/2000 S. 0019 - 0025 verwendet wird, und
- dem schokoladehaltigen Aufstrich kein zusätzliches Fett zugesetzt wird, und folgende Schritte durchgeführt werden:
- Bereitstellen eines Waffelunterteils mit einer Schichtdicke im Bereich von 0,5 mm bis 15 mm, wobei das Waffelunterteil zumindest einseitig eine Strukturierung, beispielsweise ein Karo- oder Rautenmuster, aufweist, durch die die Oberfläche der jeweiligen Waffelschicht vergrößert ist;
- Erwärmen des schokoladehaltigen Aufstrichs auf eine Temperatur im Bereich von 14°C bis 47°C, bevorzugt im Bereich von 25°C bis 47°C, um schokoladehaltige Aufstrich fließ- und/oder streichfähig zu machen;
- Aufstreichen oder Aufgießen des erwärmten schokoladehaltigen Aufstrichs auf das Waffelunterteil mit einer Schichtdicke im Bereich von 0,5 mm bis 30 mm zur Erzeugung eines Waffelblocks, wobei der schokoladehaltige Aufstrich in etwaige Vertiefungen des strukturierten Waffelunterteils eindringt und auf diese Weise die Kontaktfläche zwischen schokoladehaltigem Aufstrich und Waffelunterteil vergrößert und maximiert wird;
- Abkühlen des Waffelblocks; und
- Schneiden des Waffelblocks in Waffelriegel,
so das das Waffelprodukt bei Raumtemperatur unter Aufwendung einer Gesamtbisskraft von 110 N bis 180 N ± 20 %, bevorzugt ± 10 %, in zu seiner Dickenerstreckung im Wesentlichen parallelen Richtung, zerteilbar ist.

11. Verfahren nach Anspruch 10,
**dadurch gekennzeichnet, dass**
vor dem Abkühlen des Waffelblocks zumindest eine weitere Waffelschicht sowie gegebenenfalls auf die zumindest eine weitere Waffelschicht zumindest eine weitere Schicht aus erwärmtem schokoladehaltigem Aufstrich, insbesondere stapelweise und vorzugsweise alternierend, aufgebracht wird.

12. Verfahren nach einem der vorhergehenden Ansprüche 10 bis 11,
**dadurch gekennzeichnet, dass**
auf das Waffelprodukt, insbesondere auf den Waffelblock und/oder die Waffelriegel eine Beschichtung, beispielsweise eine Glasurmasse und/oder Schokoladenkuvertüre und/oder kakaohaltige Fettglasur und/oder Streusel und/oder eine Dekoration, aufgebracht wird.

## Claims

1. A waffle product having an edible waffle base and a chocolate-containing spread made of chocolate, white chocolate or milk chocolate arranged on top of the waffle base,
**characterized in that**
the chocolate-containing spread contains only chocolate, white chocolate and milk chocolate within the meaning of European Parliament and Council Directive 2000/36/EC of 23 June 2000 relating to cocoa and chocolate products intended for human consumption, published in Official Gazette No. L 197 of 03/08/2000 pp 0019 - 0025 and
the chocolate-containing spread comprises no additionally added fat, which means that the chocolate-containing spread is crunchy and can be dissected at a standardized thickness of 3 mm ± 10 % at room temperature using a biting force of:
- at least 125 N in the case of chocolate,
- at least 115 N in the case of white chocolate and
- at least 110 N in the case of milk chocolate,
with ± 20 %, preferably ± 10 %, in each case and the waffle base can be dissected at a standardized thickness of 5 mm ± 10 % at room temperature using a biting force of 30 N ± 10 N in a substantially parallel direction to the respective thickness extension of the chocolate-containing spread and waffle base,
wherein the chocolate-containing spread has a layer thickness in the region of 0.5 mm to 30 mm and the waffle base has a layer thickness in the region of 0.5 mm to 15 mm and
wherein the waffle base comprises patterning, for example a checked or diamond pattern, at least on one side and the spread is very closely connected to the waffle base in a full face manner, wherein the chocolate-containing spread has penetrated any recesses in the patterned waffle base and in this way the contact surface between the chocolate-containing spread and the waffle base is enlarged and maximized.

2. The waffle product according to claim 1,
**characterized in that**
a proportion of waffle to a proportion of chocolate-containing spread (30) falls within the range of 5 % : 95 % to 80 % : 20 %.

3. The waffle product according to one of the preceding claims,
**characterized in that**
a chocolate proportion of the chocolate-containing spread lies in the range of 20 % to 100 %, preferably in the region of 50 % to 100 % and particularly preferably in the region of 65 % to 100 %, wherein chopped nuts and/or dried fruit are contained where appropriate as additional constituents to make it up to 100 %.

4. The waffle product according to one of the preceding claims,
**characterized in that**
at least one further waffle layer and, where appropriate, at least one further layer of chocolate-containing coating is arranged above the chocolate-containing spread.

5. The waffle product according to claim 4,
**characterized in that**
layer thicknesses of the further waffle layer(s) and/or of the further layer(s) of chocolate-containing spread substantially correspond to the layer thicknesses of the waffle base and the chocolate-containing spread.

6. The waffle product according to one of the preceding claims 4 or 5,
**characterized in that**
a biting force for dissecting one or each further waffle layer substantially corresponds to that of the waffle base and/or a biting force for dissecting one or each further layer of chocolate-containing spread substantially corresponds to that of the chocolate-containing spread which is arranged on the waffle base.

7. The waffle product according to one of the preceding claims,
**characterized in that**
the waffle product is provided at least in part with a coating, for example a glaze and/or chocolate coating and/or cocoa-containing chocolate-flavoured coating and/or sprinkles and/or decorations.

8. The waffle product according to one of the preceding claims,
**characterized in that**
the waffle product is formed without a separate adhesive layer.

9. The waffle product according to one of the preceding claims,
**characterized in that**
the further waffle layer(s) has/have patterning, for example a checked or diamond pattern, on at least one side.

10. A method for producing a waffle product with an edible, substantially planar, waffle base and a chocolate-containing spread made of chocolate, white chocolate or milk chocolate arranged on top of the waffle base extending substantially parallel thereto, wherein
- only chocolate, white chocolate and milk chocolate within the meaning of the European Parliament and Council Directive 2000/36/EC of 23 June 2000 relating to cocoa and chocolate products for human consumption, published in Official Gazette No. L 197 of 03/08/2000 pp 0019 - 0025, is used and
- no additional fat is added to the chocolate-containing spread and the following steps are carried out:
- provision of a waffle base with a layer thickness in the range of 0.5 mm to 15 mm, wherein the waffle base comprises patterning, for example a checked or diamond pattern, at least on one side, through which the surface of the respective waffle layer is enlarged;
- heating of the chocolate-containing spread to a temperature in the range of 14 °C to 47 °C, preferably in the range of 25 °C to 47 °C, in order to make a chocolate-containing spread flowable and/or spreadable;
- spreading or pouring of the heated chocolate-containing spread on the waffle base with a layer thickness in the range of 0.5 mm to 30 mm to produce a waffle block, wherein the chocolate-containing spread penetrates any recesses in the patterned waffle base and in this way the contact surface between the chocolate-containing spread and the waffle base is enlarged and maximized;
- cooling of the waffle block and
- cutting of the waffle block into waffle bars,
so that the waffle product can be dissected at room temperature using a total biting force of 110 N to 180 N ± 20 %, preferably ± 10 %, in a direction substantially parallel to its thickness extension.

11. The method according to claim 10,
**characterized in that**
before the waffle block is cooled, at least one further waffle layer, and also possibly at least one further layer of heated chocolate-containing spread, is applied to the at least one further waffle layer, in particular in a stacked and preferably alternating fashion.

12. The method according to one of the preceding claims 10 to 11,
**characterized in that**
a coating, for example a glaze and/or chocolate coating and/or cocoa-containing chocolate-flavoured coating and/or sprinkles and/or decorations are applied to the waffle product, in particular to the waffle block and/or the waffle bar.

## Revendications

1. Produit de type gaufrette avec une partie inférieure de gaufrette comestible et un étalement contenant du chocolat disposé au-dessus de la partie inférieure de gaufrette, en chocolat, chocolat blanc ou chocolat au lait,
**caractérisé en ce que**
l'étalement contenant du chocolat ne contient que du chocolat, du chocolat blanc et du chocolat au lait au sens de la Directive 2000/36/UE du Parlement Européen et du Conseil du 23 juin 2000 relatif aux Produits à base de cacao et de chocolat pour l'alimentation humaine, publiée dans le Journal Officiel N° L 197 du 03/08/2000, p. 0019 - 0025, et
l'étalement contenant du chocolat ne comporte aucune graisse supplémentaire ajoutée de telle manière que l'étalement contenant du chocolat est constitué comme ferme sous la dent et peut être dispersé pour une épaisseur normalisée de 3 mm ± 10 % à une température ambiante en déployant une force de mordant :
- d'au moins 125 N, en cas de chocolat,
- d'au moins 115 N, en cas de chocolat blanc,et
- d'au moins 110 N, en cas de chocolat au lait,
respectivement de ± 20 %, de préférence ± 10 % et la partie inférieure de gaufrette à un épaisseur normalisée de 5 mm ± 10 % à une température ambiante en déployant une force de mordant de 30 N ± 10 N, dans une direction pour l'essentiel parallèle à l'extension d'épaisseur respective de l'étalement contenant du chocolat et de la partie inférieure de gaufrette,
sachant que l'étalement contenant du chocolat comporte une épaisseur de couche se situant dans une plage de 0,5 mm à 30 mm et la partie inférieure de gaufrette une épaisseur de couche dans une plage de 0,5 mm à 15 mm, et sachant que la partie inférieure de gaufrette comporte au moins d'un côté une structuration, par exemple un modèle à carreaux ou losanges et l'étalement est relié sur toute la surface et intimement à la partie inférieure de gaufrette, sachant que l'étalement contenant du chocolat a pénétré dans des cavités éventuelles de la partie inférieure de gaufrette structurée et de cette manière la surface de contact entre l'étalement contenant du chocolat et la partie inférieure de gaufrette est agrandie et maximisée.

2. Produit de type gaufrette selon la revendication 1,
**caractérisé en ce**
**qu'**une partie de gaufrette se situe par rapport à une partie d'étalement contenant du chocolat (30) dans une plage de 5 % : 95 % à 80 % : 20 %.

3. Produit de type gaufrette selon l'une quelconque des revendications précédentes,
**caractérisé en ce que**
une part de chocolat de l'étalement contenant du chocolat se situe dans une plage de 20 % à 100 %, de préférence dans une plage de 50 % à 100 % et en particulier de préférence dans une plage de 65 % à 100 %, sachant que le cas échéant sont contenus notamment des noix et/ou fruits secs et/ou fruits à coques broyés en tant qu'ingrédients supplémentaires pour complément à 100 %.

4. Produit de type gaufrette selon l'une quelconque des revendications précédentes,
**caractérisé en ce**
**qu'**au-dessus de l'étalement contenant du chocolat est disposée au moins une autre couche de gaufrette ainsi que le cas échéant au moins un autre étalement contenant du chocolat.

5. Produit de type gaufrette selon la revendication 4,
**caractérisé en ce que**
les épaisseurs de couche de l'autre/des autres couche(s) de gaufrette et/ou de l'autre/des autres couche(s) d'étalement contenant du chocolat correspondent pour l'essentiel aux épaisseurs de couche de la partie inférieure de gaufrette et de l'étalement contenant du chocolat.

6. Produit de type gaufrette selon l'une quelconque des revendications précédentes 4 ou 5,
**caractérisé en ce**
**qu'**une force de mordant pour disperser une ou chaque autre couche de gaufrette correspond pour l'essentiel à celle de la partie inférieure de gaufrette et/ou une force de mordant pour disperser une ou chaque autre couche d'étalement contenant du chocolat correspond pour l'essentiel à celle de l'étalement contenant du chocolat, qui est disposé sur la partie inférieure de gaufrette.

7. Produit de type gaufrette selon l'une quelconque des revendications précédentes,
**caractérisé en ce que**
le produit de type gaufrette est doté d'un revêtement, par exemple une masse de glaçage et/ou une couverture de chocolat et/ou un glaçage gras contenant du cacao et/ou un saupoudrage sablé et/ou une décoration.

8. Produit de type gaufrette selon l'une quelconque des revendications précédentes,
**caractérisé en ce que**
le produit de type gaufrette est constitué sans couche d'adhésif spéciale.

9. Produit de type gaufrette selon l'une quelconque des revendications précédentes,
**caractérisé en ce que**
l'autre/les autres couche(s) de gaufrette comporte(nt) au moins d'un côté une structuration, par exemple une trame à carreaux ou à losanges.

10. Procédé de fabrication d'un produit de type gaufrette avec une partie inférieure de gaufrette comestible pour l'essentiel plate et un étalement contenant du chocolat disposé au-dessus de la couche inférieure de gaufrette, s'étendant pour l'essentiel parallèlement à celle-ci, en chocolat, chocolat blanc ou chocolat au lait, sachant que
- seul du chocolat, du chocolat blanc et du chocolat au lait au sens de la Directive 2000/36/UE du Parlement Européen et du Conseil du 23 juin 2000 relatif aux Produits à base de cacao et de chocolat pour l'alimentation humaine, publiée dans le Journal Officiel N° L 197 du 03/08/2000, p. 0019 - 0025, et
- aucune graisse supplémentaire n'est ajoutée à l'étalement contenant du chocolat et les étapes suivantes sont exécutées :
- préparation d'une partie inférieure de gaufrette avec une épaisseur de couche située dans une plage de 0,5 mm à 15 mm, sachant que la partie inférieure de gaufrette comporte au moins d'un côté une structuration, par exemple un modèle à carreaux ou à losanges par laquelle la surface supérieure de la couche de gaufrette respective est agrandie ;
- réchauffage de l'étalement contenant du chocolat à une température se situant dans une plage de 14 °C à 47 °C, de préférence dans une plage de 25 °C à 47 °C pour rendre l'étalement contenant du chocolat fluable et/ou étalable,
- étalement ou versement de l'étalement contenant du chocolat réchauffé sur la partie inférieure de gaufrette avec une épaisseur de couche dans une plage de 0,5 mm à 30 mm pour produire un bloc de gaufrettes, sachant que l'étalement contenant du chocolat s'enfonce dans des cavités éventuelles de la partie inférieure de gaufrette structurée et de cette manière, la surface de contact entre l'étalement contenant du chocolat et la partie inférieure de gaufrette est agrandie et maximisée,
- refroidissement du bloc de gaufrettes, et
- découpe du bloc de gaufrettes en barres de gaufrettes,
de telle manière que le produit de type gaufrette peut être dispersé à température ambiante en déployant une force de mordant totale de 110 N à 180 N ± 20, de préférence ± 10 %, dans une direction pour l'essentiel parallèle à son extension d'épaisseur.

11. Procédé selon la revendication 10,
**caractérisé en ce**
**qu'**avant le refroidissement du bloc de gaufrettes, au moins une autre couche de gaufrette ainsi que le cas échéant sur au moins une autre couche de gaufrette, au moins une autre couche d'étalement contenant du chocolat réchauffée est appliquée notamment en empilement et de préférence en alternance.

12. Procédé selon l'une quelconque des revendications 10 à 11,
**caractérisé en ce que**
sur le produit de type gaufrette, notamment sur le bloc de gaufrettes et/ou les barres de gaufrettes, on applique un revêtement, par exemple une masse de glaçage et/ou une couverture en chocolat et/ou un glaçage gras contenant du cacao et/ou un saupoudrage sablé et/ou une décoration.
